# EUROPEAN PATENT APPLICATION

(11) **EP 2 974 821 A1**
(43) Date of publication of application: **20.01.2016**
(21) Application number: 14763939.7
(22) Date of filing: 18.02.2014
(51) Int. Cl.: B23K 11/00, B23K 11/14, H01H 11/00, H01H 49/00, H01H 50/02

(54) **STRUCTURE FOR BONDING METAL PARTS TO EACH OTHER AND BONDING METHOD THEREFOR**

(30) Priority: 13.03.2013 JP 2013051049
(71) Applicant: Omron Corporation, Kyoto-shi, Kyoto 600-8530 (JP)
(72) Inventor: YOSHIOKA, Hidekazu, Kyoto-shi Kyoto 600-8530 (JP); NAGASAKA, Shogo, Kyoto-shi Kyoto 600-8530 (JP); TSUCHIDA, Makoto, Kyoto-shi Kyoto 600-8530 (JP); YOSHIDA, Hitoshi, Kyoto-shi Kyoto 600-8530 (JP)
(74) Representative: Kilian Kilian & Partner
(86) International application number: PCT/JP2014/053824
(87) International publication number: WO 2014/141829

(57) **Abstract**

A flange 24 is provided around a metal cap 21. A wire 25 is disposed on a bottom surface of the flange 24 while formed into a circular shape. Preferably the wire 25 is tack-welded to the bottom surface of the flange 24. The wire 25 to be used has a melting point within a range of -150°C to +150°C with respect to melting points of the metal cap 21 and a metal base 22. The flange 24 of the metal cap 21 and the metal base 22 overlap each other with the wire 25 sandwiched therebetween. Then a current is passed between the flange 24 of the metal cap 21 and the metal base 22 to melt the wire 25, whereby the flange 24 and the metal base 22 are resistance-welded to each other.

## Description

### TECHNICAL FIELD

The present invention relates to a structure for bonding metal parts to each other and a bonding method therefor. Particularly, the present invention relates to a structure for bonding two metal parts to each other and a bonding method therefor, which are useful in bonding the metal parts to each other in an airtight manner.

### BACKGROUND ART

In a sealed device, particularly in a device required for high-level airtightness, it is necessary to seal an internal device in a metal casing. Therefore, generally the casing is constructed with a metal cap and a metal base, and outer peripheries of the metal cap and the metal base are resistance-welded to each other in an airtight manner.

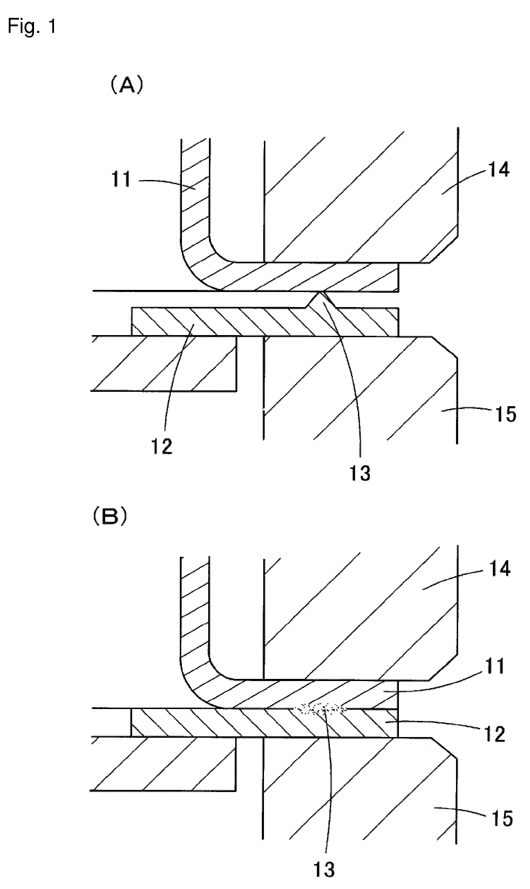

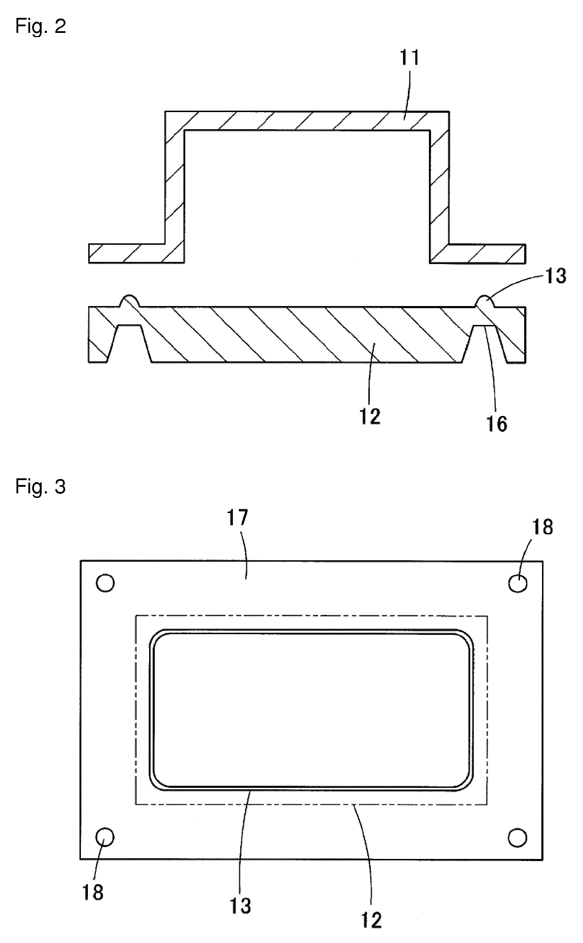

A sealed contact device disclosed in Patent Document 1 can be cited as an example of the sealed device. Figs. 1 (A) and 1 (B) are sectional views illustrating a method disclosed in Patent Document 1 for bonding the outer peripheries of a metal cap 11 and a metal base 12 to each other. Fig. 1 (A) illustrates a pre-resistance-welding state, and Fig. 1 (B) illustrates a post-resistance-welding state. Fig. 2 illustrates a sectional shape of the metal cap 11 and the metal base 12 constituting the casing, and internal devices such as a relay and a switch are accommodated in the casing. As illustrated in Fig. 2, a projection 13 is formed on a surface to be bonded of the metal base 12. The projection 13 is formed linearly and continuously circularly along a whole periphery of the surface to be bonded located in an outer periphery of the metal base 12. The projection 13 is prepared by press working, and a sectional shape perpendicular to a lengthwise direction is a substantially triangular shape in which a top end is pointed.

In a step of bonding the surfaces to be bonded of the metal cap 11 and the metal base 12 to each other, as illustrated in Fig. 1 (A), the surfaces to be bonded of the metal cap 11 and the metal base 12 face each other with the projection 13 sandwiched therebetween. Then the outer peripheries of the metal cap 11 and the metal base 12 are pressurized while sandwiched between upper and lower electrodes 14 and 15. At this point, when a current is passed between the electrodes 14 and 15, as illustrated in Fig. 1(B), the projection 13 is melted by resistance heat generation to bond the surfaces to be bonded of the metal cap 11 and the metal base 12 to each other.

However, in the bonding method, it is necessary to previously form the circular projection on the surface to be bonded of the metal base. As to the projection used in the resistance welding, because necessary energy is increased with increasing size at the welding, it is necessary to provide the small projection on the surface to be bonded of the metal base.

When a height of the projection is uneven, a gap is generated between the projection and the surface to be bonded of the metal cap in overlapping the metal base and the metal cap with each other, which generates a welding defect. It is necessary to evenly form the height of the projection over the whole length to ensure the airtightness between the metal base and the metal cap at a bonding place. Therefore, it is necessary to provide the small and accurate projection on the surface to be bonded of the metal base, and a high-level working technology is required for the preparation of the projection.

In some cases, the metal base is subjected to plating. Generally, barrel plating or suspension plating (rack plating) is used as the plating method. In the barrel plating, plural parts are put in a cylindrical barrel, the barrel is rotated while the barrel and the plural parts are dipped altogether in a plating solution, and the parts in the barrel are subjected to electroplating. In the barrel plating, a large number of parts can be subjected to the plating at one time. However, in the barrel plating, the part is easily scratched in putting the part in the barrel or in taking out the part from the barrel. Because the plating is performed while the barrel is rotated to rotate the parts in the barrel, there is a risk that the parts collide with each other or a risk that the parts collide with the barrel to generate scratches or dents. Therefore, when the barrel plating is performed on the metal base in which the resistance welding projection is formed, the projection drops out or crashes to generate a bonding defect.

In contrast, in the suspension welding, the parts are dipped in the plating solution while suspended on a hook (electrode jig) one by one, and the parts are subjected to the electroplating. In the suspension welding, because the parts are suspended on the hook one by one, the parts do not contact or collide with each other, and the scratches or dents are not generated in the parts. On the other hand, in the suspension welding, it is necessary to suspend the parts on the hook one by one, and it is necessary to remove the parts from the hook one by one. Therefore, it takes a long time to work, and the suspension welding is unsuitable for a plating treatment of a large quantity of metal bases. However, because the metal part including the projection cannot be subjected to the barrel plating, conventionally it is necessary to perform the suspension plating at the cost of efficiency.

Additionally, the metal base including the resistance welding projection has various factors of cost increase. For example, when the projection is prepared by the press working, a press working metal die is necessary for each kind or each size of the metal base, and the cost of the metal die increases.

In the case that a metal base raw material is conveyed with a conveyer, sometimes a metal base board is positioned by inserting a positioning pin of the conveyer in a positioning hole made in the metal base raw material. Fig. 3 illustrates an example of a metal base raw material 17. The metal base raw material 17 is cut along an alternate long and two short dashes line in Fig. 3 to obtain the metal base 12. In the metal base raw material 17 of Fig. 3, the projection 13 is formed along an edge of a region constituting the metal base 12, and a positioning hole 18 is made outside the region constituting the metal base 12. On the other hand, as illustrated in Fig. 2, when the metal base 12 is engraved by the press working to form the projection 13, a groove 16 is formed in a reverse side of the projection 13. Therefore, the metal material in a region outside the projection or groove is drawn to the inside (to the sides of the projection and groove). At this point, when the region outside the projection 13 is drawn to the inside by the press working, there is a risk that the positioning pin is not inserted due to deviation of the positioning hole 18. Usually the positioning hole 18 is provided at a position sufficiently separated from the projection 13 because the deviation of the positioning hole 18 increases as the positioning hole 18 comes close to the projection 13. A portion outside an alternate long and two short dashes line in Fig. 3 is finally cut in the metal base raw material 17. When the positioning hole 18 is provided while sufficiently separated from the projection 13, an area of a waste portion of the metal base raw material 17 is enlarged to increase a useless portion of the metal material. In the case that the positioning hole is not provided, it is necessary to provide a margin around the metal base in order to form the metal base by the press working. Therefore, the useless portion of the metal base raw material is generated, and the waste portion of the metal material is generated.

### PRIOR ART DOCUMENT

### PATENT DOCUMENT

Patent Document 1: Japanese Unexamined Patent Publication No. 2002-75108

### SUMMARY OF THE INVENTION

### PROBLEMS TO BE SOLVED BY THE INVENTION

In the light of the technical background, the present invention addresses the problems, and an object of the present invention is to provide bonding structure and bonding method capable of bonding the metal parts to each other with simple structure and method.

### MEANS FOR SOLVING THE PROBLEM

According to one aspect of the present invention, in a structure for bonding metal parts to each other, a first metal part and a second metal part are bonded to each other using a bonding member having a melting point within a range of -150°C to +150°C with respect to melting points of the first and second metal parts.

In the structure for bonding metal parts to each other of the present invention, because the metal parts are bonded to each other using the bonding member, it is unnecessary to previously form the projection on the metal part by the press working unlike the conventional example. Therefore, the necessity to process the metal part is eliminated, and the necessity for a press working facility is eliminated, whereby the cost is reduced. The change of the kind or size of the metal part can simply be dealt with to improve flexibility. Additionally, the use of the bonding member having the melting point within the range of -150°C to +150°C for the melting points of the first and second metal parts increases a nugget diameter of a portion to be bonded, bonding reliability is improved, and the higher airtightness and bonding strength can be obtained.

According to the aspect of the present invention, in the structure for bonding metal parts to each other, preferably conductivity of the bonding member is less than or equal to 30%IACS. In the configuration, the nugget diameter of the portion to be bonded increases, the bonding reliability is improved, and the higher airtightness and bonding strength can be obtained.

According to the aspect of the present invention, in the structure for bonding metal parts to each other, preferably the bonding member is a wire rod before the bonding. In the configuration, the wire rod formed by punching or drawing, particularly a wire can be used. Therefore, the metal parts can be bonded to each other at low cost. The change of the kind or size of the metal part can easily be dealt with only by placing the wire rod along the surface to be bonded of the metal part.

According to the aspect of the present invention, in the structure for bonding metal parts to each other, preferably a width of the bonding member before the bonding is less than or equal to one-fifth of a width of a surface to be bonded of each of the first and second metal parts. In the configuration, the nugget diameter of the portion to be bonded can be increased, the bonding reliability can be improved, and the higher airtightness and bonding strength can be obtained.

According to the aspect of the present invention, in the structure for bonding metal parts to each other, preferably a surface to be bonded of each of the first metal part and the second metal part is a planar surface. In the present invention, the metal parts are bonded to each other using the bonding member, so that the surfaces to be bonded of the metal parts can be formed into a planar shape. Therefore, the metal part can be subjected to barrel plating.

According to the aspect of the present invention, in the structure for bonding metal parts to each other, preferably at least one of surfaces to be bonded of the first and second metal parts is not subjected to plating. This is because necessity for the plating is eliminated in the case that the metal part is a stainless steel product.

According to another aspect of the present invention, a method for bonding metal parts to each other, the method includes: a first step of sandwiching a bonding member between surfaces to be bonded of a first metal part and a second metal part, the bonding member having a melting point within a range of -150°C to +150°C with respect to melting points of the first and second metal parts; and a second step of resistance-welding the surfaces to be bonded of the first and second metal parts to each other using the bonding member.

In the method for bonding metal parts to each other of the present invention, because the metal parts are bonded to each other using the bonding member, it is unnecessary to previously form the projection on the metal part by the press working unlike the conventional example. Therefore, the necessity to process the metal part is eliminated, and the necessity for a press working facility is eliminated, whereby the cost is reduced. The change of the kind or size of the metal part can simply be dealt with to improve flexibility. Additionally, the use of the bonding member having the melting point within the range of -150°C to +150°C for the melting points of the first and second metal parts increases a nugget diameter of a portion to be bonded, bonding reliability is improved, and the higher airtightness and bonding strength can be obtained.

According to the aspect of the present invention, in the method for bonding metal parts to each other, preferably a wire rod is used as the bonding member. In the configuration, the wire rod formed by the punching or drawing, particularly the wire can be used. Therefore, the metal parts can be bonded to each other at low cost. The change of the kind or size of the metal part can easily be dealt with only by placing the wire rod along the surface to be bonded of the metal part.

According to the aspect of the present invention, in the method for bonding metal parts to each other, preferably the bonding member is a wire rod including ends, and the bonding member is inserted while circularly extending along the surfaces to be bonded of the first and second metal parts in the first step. In the configuration, the region inside the surface to be bonded can be sealed in the airtight manner using the wire rod such as the wire.

According to the aspect of the present invention, in the method for bonding metal parts to each other, preferably both ends of the wire rod are disposed in parallel with a gap less than or equal to 1.5 times a width of the wire rod in the first step. This is because, when the gap between the ends of the wire rod is greater than 1.5 times the width of the wire rod, the gap remains in the portion to be bonded after the bonding to degrade the airtightness of the portion to be bonded. In the method for bonding metal parts to each other, preferably both ends of the bonding member are butted against each other in the first step.

According to the aspect of the present invention, in the method for bonding metal parts to each other, preferably the bonding member is a closed wire rod including no end. In the configuration, the wire rod such as the wire is used, and therefore the region inside the surface to be bonded can be sealed in the airtight manner using the wire rod such as the wire.

According to the aspect of the present invention, in the method for bonding metal parts to each other, preferably a width of the wire rod is less than or equal to one-fifth of a width of the surface to be bonded of each of the first and second metal parts. In the configuration, the nugget diameter is increased, so that the metal portions can securely be bonded to each other to enhance the bonding strength.

According to the aspect of the present invention, in the method for bonding metal parts to each other, preferably the wire rod is tack-welded to the first or second metal part in the first step. In the configuration, a risk of dropping the wire rod from the surface to be bonded is eliminated in the bonding step, thereby facilitating the bonding step.

According to still another aspect of the present invention, in a contact device in which a contact is disposed in a space formed by a first metal part and a second metal part, the first metal part and the second metal part are bonded to each other using a bonding member having a melting point within a range of -150°C to +150°C with respect to melting points of the first and second metal parts. In the contact device of the present invention, the contact can be sealed with the higher airtightness at low cost.

In the present invention, the means for solving the problem has a feature that the above constituents are properly combined, and many variations can be made by the combinations of the constituents.

### BRIEF DESCRIPTION OF THE DRAWINGS

Figs. 1(A) and 1(B) are schematic sectional diagrams illustrating an example of a conventional boding method adopted for resistance welding of a metal base and a metal cap.
Fig. 2 is a schematic sectional diagram of the metal cap and the metal base, which are partially illustrated in Figs. 1(A) and 1(B).
Fig. 3 is a plan view illustrating a metal base raw material used to prepare the metal base.
Fig. 4 is a view illustrating the metal cap and the metal base before welding in an embodiment of the present invention when the metal cap and the metal base are viewed from an oblique direction.
Fig. 5 is a bottom view of the metal cap in Fig. 4.
Figs. 6(A) and 6(B) are schematic sectional diagrams illustrating a step of resistance-welding of the metal cap and the metal base to each other.
Fig. 7 is a schematic diagram illustrating a resistance welding machine.
Figs. 8(A) to 8(C) are schematic diagrams illustrating a state in which the metal cap and the metal base are resistance-welded to each other.
Fig. 9(A) is a view illustrating an example in which one wire is used. Fig. 9(B) is a view illustrating an example in which two wires are used. Fig. 9(C) is a view illustrating an example in which four wires are used.
Figs. 10(A) to 10(D) are schematic diagrams illustrating dispositions of both ends of a circularly-bent wire.
Figs. 11(A) and 11(B) are schematic diagrams illustrating a disposition in which both the ends of the circularly-bent wire are intersected.
Figs. 12(A) to 12(C) are views illustrating examples in which both the ends of one to four wires are intersected to circularly dispose the wires.
Figs. 13(A) to 13(C) are photographs illustrating the disposition of the wire in a sample that is prepared to verify a degree of airtightness between the bonded metal cap and metal base.
Figs. 14(A) to 14(C) are photographs illustrating the disposition of the wire in another sample that is prepared to verify the degree of airtightness between the bonded metal cap and metal base.
Fig. 15 is a view illustrating nugget diameters in various wire materials having different melting points and different conductivities.
Fig. 16(A) is a view illustrating a simulation result of a nugget in which a wire material is made of Ag. Fig. 16(B) is a view illustrating a simulation result of the nugget in which the wire material is made of Cu. Fig. 16(C) is a view illustrating a simulation result of the nugget in which the wire material is made of Al. Fig. 16(D) is a view illustrating a simulation result of the nugget in which the wire material is made of Au. Fig. 16(E) is a view illustrating a simulation result of the nugget in which the wire material is made of brass.

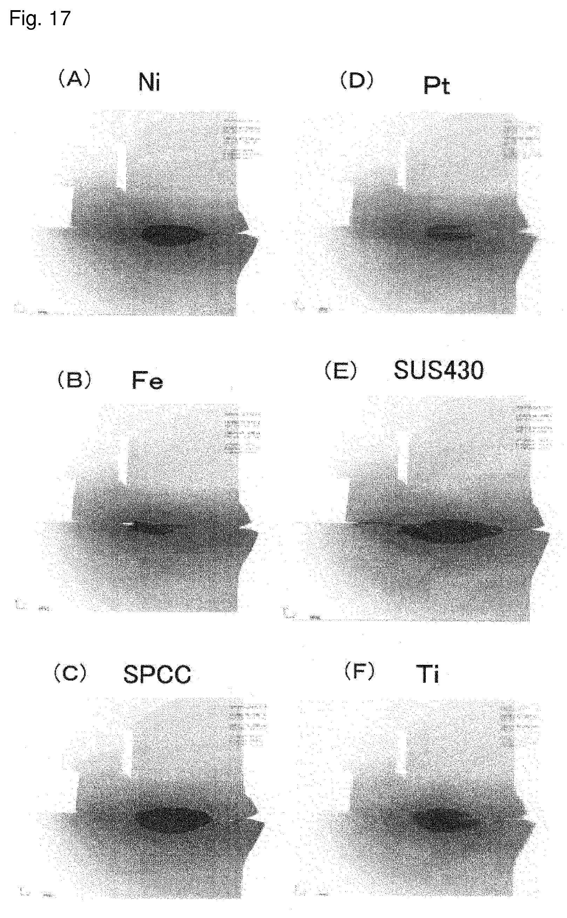

Fig. 17(A) is a view illustrating a simulation result of the nugget in which the wire material is made of Ni. Fig. 17(B) is a view illustrating a simulation result of the nugget in which the wire material is made of Fe. Fig. 17(C) is a view illustrating a simulation result of the nugget in which the wire material is made of SPCC. Fig. 17(D) is a view illustrating a simulation result of the nugget in which the wire material is made of Pt. Fig. 17(E) is a view illustrating a simulation result of the nugget in which the wire material is made of SUS430. Fig. 17(F) is a view illustrating a simulation result of the nugget in which the wire material is made of Ti.
Fig. 18(A) is a view illustrating a simulation result of the nugget for use of a virtual wire material having the melting point lower than that of the metal part by 150°C. Fig. 18(B) is a view illustrating a simulation result of the nugget for the use of the virtual wire material having the melting point higher than that of the metal part by 150°C.
Figs. 19(A) and 19(B) are views illustrating simulation results of the nugget for the use of the virtual wire material having the conductivity of about 30%IACS.
Fig. 20 is a view illustrating a relationship between a wire diameter and a nugget diameter.

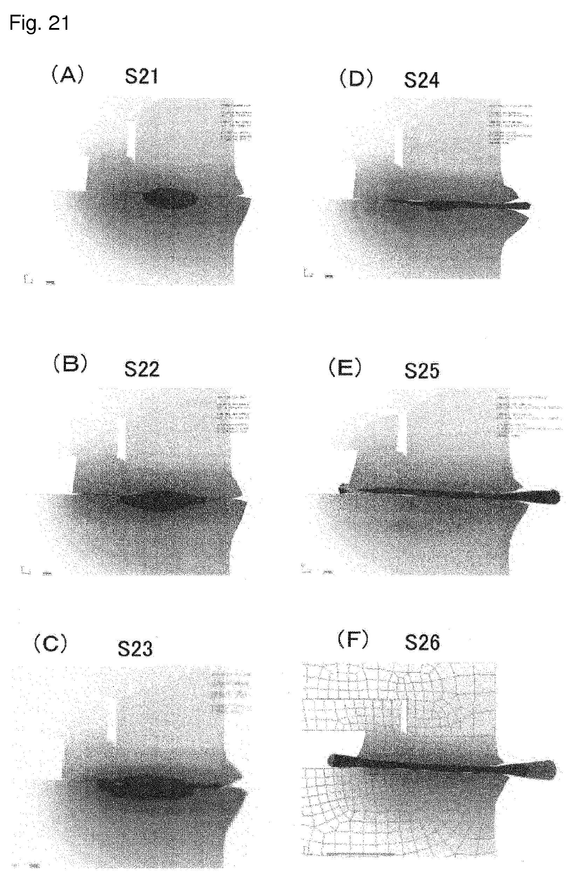

Fig. 21 (A) is a view illustrating a simulation result of the nugget in which a wire diameter is 0.1 mm. Fig. 21 (B) is a view illustrating a simulation result of the nugget in which the wire diameter is 0.2 mm. Fig. 21 (C) is a view illustrating a simulation result of the nugget in which the wire diameter is 0.3 mm. Fig. 21 (D) is a view illustrating a simulation result of the nugget in which the wire diameter is 0.4 mm. Fig. 21 (E) is a view illustrating a simulation result of the nugget in which the wire diameter is 0.6 mm. Fig. 21 (F) is a view illustrating a simulation result of the nugget in which the wire diameter is 0.8 mm.
Fig. 22 is a view illustrating a relationship between a gap between the wires and a gap between portions to be bonded when the ends of the wire are disposed in substantially parallel to each other with a gap.
Fig. 23 is a sectional view illustrating a relay constructed using a resistance-welded casing.

### DESCRIPTION OF SYMBOLS

- 21: metal cap
- 22: metal base
- 23: space
- 24: flange
- 25: wi re
- 26: tack-welded portion
- 31: resistance welding machine
- 32: upper electrode
- 33: lower electrode

### MODES FOR CARRYING OUT THE INVENTION

Hereinafter, an exemplary embodiment of the present invention will be described with reference to the drawings. However, the present invention is not limited to the following embodiment, but various changes can be made without departing from the scope of the present invention.

### (Embodiment of the present invention)

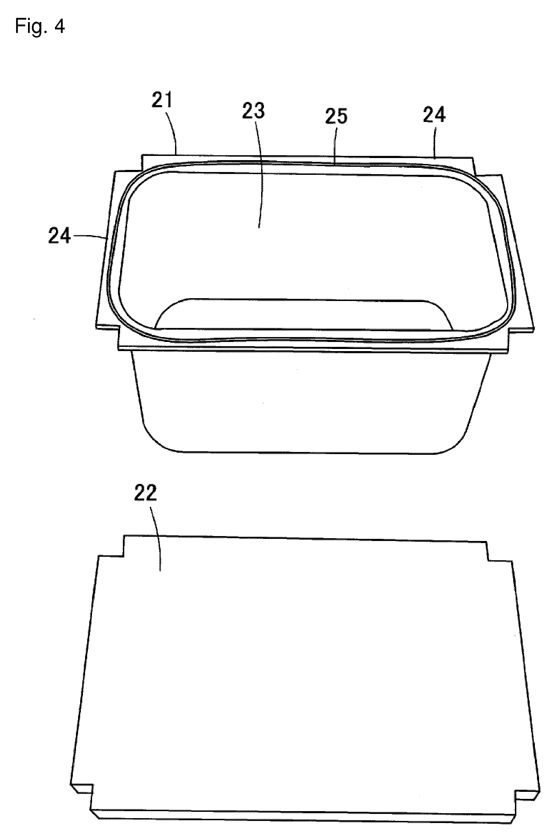

Hereinafter, an embodiment of the present invention will be described with reference to the drawings. Fig. 4 is a perspective view illustrating a metal cap 21 (one of metal parts) and a metal base 22 (the other metal part), the metal cap 21 and the metal base 22 constituting a hermetic sealing casing. Fig. 4 illustrates a state of the metal cap 21 viewed from a bottom surface side and a state of the metal base 22 viewed from a top surface side. The metal cap 21 includes a storage space 23 in which the bottom surface side is opened, and a flange 24 is formed in a surrounding on the bottom surface side. For example, an internal device such as a relay and a switch is accommodated in the space 23 of the metal cap 21. The metal base 22 is a flat plate. The metal cap 21 and the metal base 22 may be made of a metal material, such as iron and stainless steel, which can be used in resistance welding.

The metal cap 21 and the metal base 22 are resistance-welded to each other with a wire rod (bonding member) interposed therebetween. While the metal cap 21 and the metal base 22 have a melting point To [°C], the wire rod having a melting point Tm [°C] of To - 150°C ≤ Tm ≤ To + 150°C is used. For example, a wire 25 is used as the wire rod.

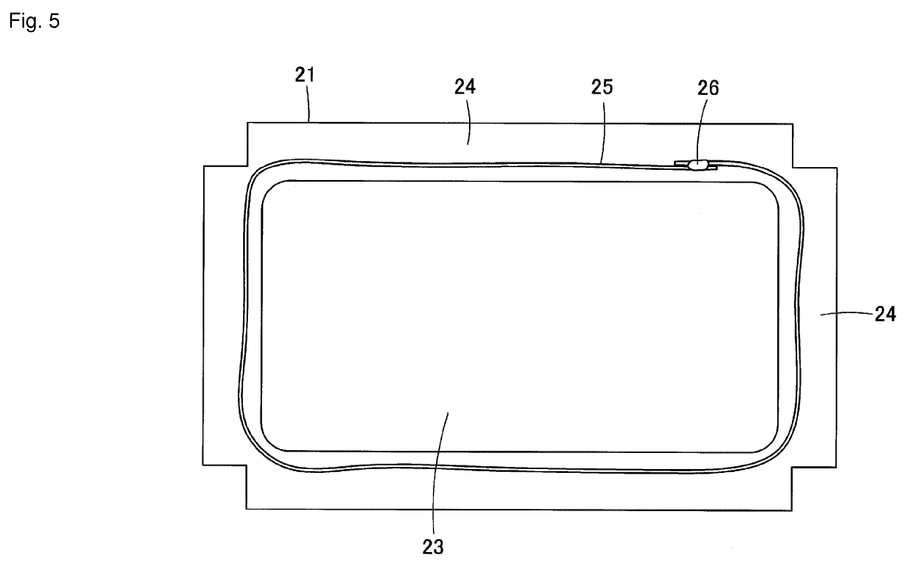

Fig. 5 illustrates a bottom surface of the metal cap 21. The wire 25 is attached to the bottom surface (surface to be bonded) of the flange 24 of the metal cap 21 as preparation for welding. The wire 25 may be only placed on the flange 24. However, desirably the wire 25 is tack-welded onto the bottom surface of the flange 24 to prevent the wire 25 from dropping off from the flange 24 or from deviating from the surface to be bonded during welding work. Desirably the resistance welding or ultrasonic welding is used as the tack-welding method. The tack-welding may be performed to an extent to which the surface of the wire 25 is bonded to the flange 24, and it is necessary to pay attention to excessive crush of the wire 25. Although Fig. 5 illustrates the state in which both ends of the wire 25 are tack-welded by one tack-welded portion 26, the wire 25 may be tack-welded by plural tack-welded portions 26.

### (Resistance welding)

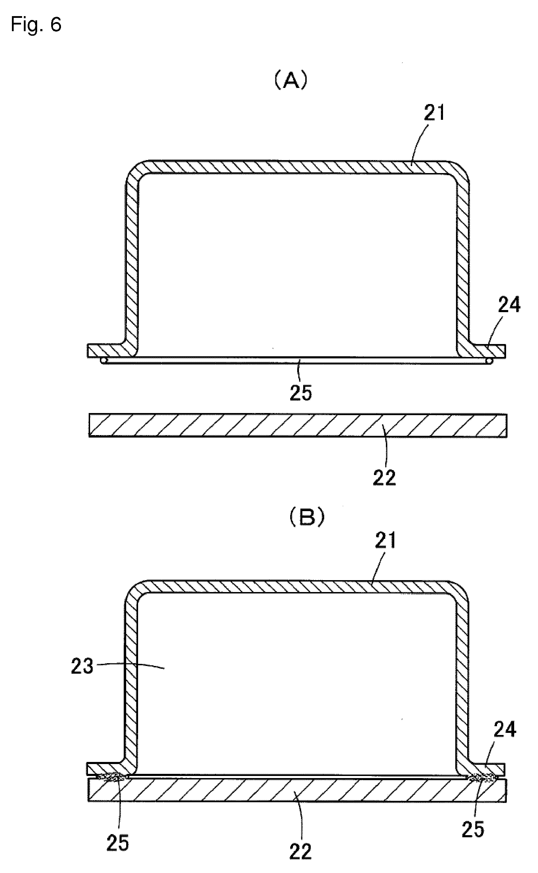

Figs. 6(A) and 6(B) illustrate a step of bonding the metal cap 21 and the metal base 22 to each other. In a first step of bonding metal parts to each other, as illustrated in Fig. 6(A), the annular wire 25 is sandwiched between the bottom surface (surface to be bonded) of the flange 24 of the metal cap 21 and the outer circumference (surface to be bonded) of the top surface of the metal base 22. At this point, although not illustrated in Figs. 6(A) and 6(B), the internal device is accommodated in the space 23 of the metal cap 21. In a second step, as illustrated in Fig. 6(B), a current is passed between the flange 24 of the metal cap 21 and the outer periphery of the metal base 22 to melt the wire 25, and the bottom surface of the flange 24 and the top surface of the metal base 22 are resistance-welded to each other by the melted wire 25.

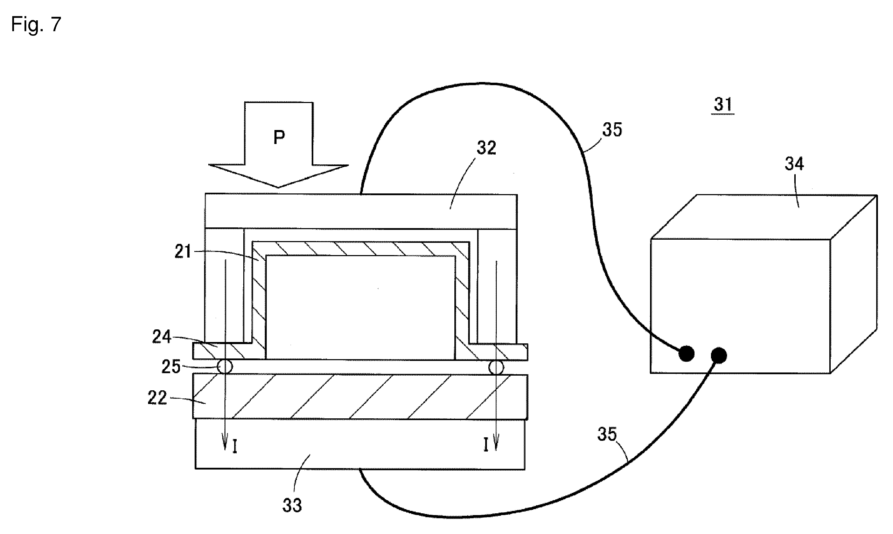

Fig. 7 illustrates a resistance welding machine 31 that resistance-welds the metal cap 21 and the metal base 22 to each other as described above. The resistance welding machine 31 includes an upper electrode 32, a lower electrode 33, and a power supply 34. The power supply 34 can apply a voltage between the upper and lower electrodes 32 and 33 through a cord 35.

In the case that the flange 24 of the metal cap 21 and the metal base 22 are resistance-welded to each other, as illustrated in Fig. 7, the metal base 22 is disposed on the lower electrode 33, and the metal cap 21 is disposed on the metal base 22 with the wire 25 sandwiched therebetween. Then the whole flange 24 of the metal cap 21 is pressed by the upper electrode 32. A pressure P is applied to the upper electrode 32 to securely bring the whole length of the wire 25 into contact with the flange 24 and the metal base 22, and the power supply 34 is turned on to apply the voltage between the upper and lower electrodes 32 and 33.

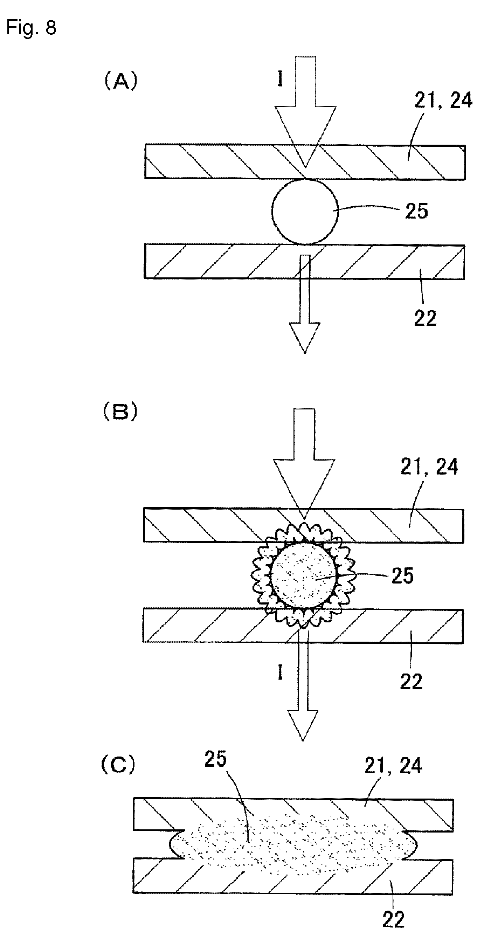

At this point, as illustrated in Fig. 8(A), the wire 25 contacts the flange 24 and the metal base 22 with a small contact area while being slightly crashed, whereby a current I is passed from the flange 24 to the metal base 22. The current is concentrated on the position of the thin wire 25, and large resistance heat is generated in the wire 25. As a result, the heat of the wire 25 spreads to the flange 24 and the metal base 22 while the wire 25 is melted as illustrated in Fig. 8(B), and the flange 24 and the metal base 22 are also melted. The melted wire 25 spreads thinly, and the portions that contact the melted wire 25 are also melted in the flange 24 and the metal cap 21. When the power supply 34 is turned off, the portion to be bonded is solidified to bond the flange 24 and the metal cap 21 to each other as illustrated in Fig. 8(C).

The wire may be tack-welded to either one of the two metal parts. However, in the case that the wire is tack-welded to the metal base for the shapes of the metal cap and the metal base, it is difficult to check whether the wire protrudes from the flange (particularly whether the wire protrudes inside) when the metal cap and the metal base overlap each other. Therefore, desirably the wire is tack-welded onto the side on which the surface to be bonded has the narrower width.

Referring to Fig. 7, the metal cap and the metal base are set to the resistance welding machine with the metal cap turned up and with the metal base turned down. Alternatively, the metal cap and the metal base may be set to the resistance welding machine with the metal base turned up and with the metal cap turned down.

Depending on usage of the casing, gas may be encapsulated in the casing by performing the resistance welding in a gas atmosphere. Alternatively, a metal tube pierces previously the metal cap 21, the gas is encapsulated in the casing through the metal tube after the metal cap 21 and the metal base 22 are resistance-welded to each other, and the casing may be sealed in the airtight manner by caulking the metal tube.

### (Advantage of the embodiment)

In the above resistance welding method, the metal parts are bonded to each other using the inexpensive off-the-shelf wire, so that the structure for bonding the metal parts to each other can be simplified to reduce cost. Additionally, not only the cost is reduced, but also the high-level airtightness (sealing property) and the bonding strength can be obtained. As to the airtightness, when measurement was performed using a sample in which the inside is evacuated, a leakage amount from the casing in the evacuated state was 1×10⁻¹⁰ Pa•m³/sec, and the high-level airtightness was achieved.

In the embodiment of the present invention, only the wire is sandwiched between the surfaces to be bonded of the metal parts, so that the change of the shape or size of the metal part can flexibly and easily be dealt with. Because the metal part is independent of the wire, there are more choices for the metal part material. The material for the wire is independent of the material for the metal part, so that an easily-melted material or an inexpensive material can be selected. Because hardness of the wire is freely selected, so that the contact area of the metal part and the wire by the pressurization can be adjusted, and heat generation efficiency can also be adjusted.

Because the wire having the even diameter can easily be manufactured, the gap between the wire and the surface to be bonded of the metal part is hardly generated when the wire is sandwiched between the metal parts, and post-bonding quality is stabilized (particularly the high airtightness can be ensured).

Compared to the conventional examples in Figs. 1 to 3, conventionally it is necessary to provide the thin projection on one of the metal parts using the high-level working technology. On the other hand, in the embodiment of the present invention, the wire is cut into a proper length, and circularly placed on or tack-welded to one of the metal parts, so that the resistance welding can be performed using the inexpensive material (wire). It is unnecessary to process the projection on the metal part, so that the metal part can be prepared at low cost. The resistance welding can be performed through the simple step, and the part processing step can be shortened.

Conventionally, a large-size press machine is necessary to form the projection by the press working. On the other hand, in the embodiment of the present invention, the necessity of the large-size press machine is eliminated. In the embodiment of the present invention, it is unnecessary to press the metal part to form the projection on the metal part. Therefore, unlike the conventional example, the groove is not generated in the surface opposite to the surface to be bonded of the metal part. Unless the groove is generated in the metal part, a sectional area of the metal part is kept constant, so that a magnetic property of a magnetic circuit in a relay incorporated in the casing can be improved.

In the case that the metal part is made of iron, it is necessary to perform the plating on the metal part. Conventionally, in the metal part in which the projection is formed, it is necessary to perform the suspension plating at the cost of the efficiency. On the other hand, in the embodiment of the present invention, it is only necessary to place the wire on the post-plating metal part. Therefore, the barrel plating can be performed, and manufacturing efficiency of a bonded product of the metal parts can be improved to reduce the cost.

Conventionally, it is necessary to perform the press working to form the projection on the metal part, whereby the margin is necessary for the press working. On the other hand, in the embodiment of the present invention, the necessity of the margin is eliminated, and the material cost of the metal part can be reduced. Even if the positioning hole is made in the raw material to prepare the metal part, the position of the positioning hole can be brought close to the region constituting the metal part, and the area of the raw material can be reduced to reduce the material cost of the metal part.

In the embodiment of the present invention, the cost can significantly be reduced in resistance-welding the metal parts to each other and in preparing the casing having the high airtightness.

### (Other forms of wire)

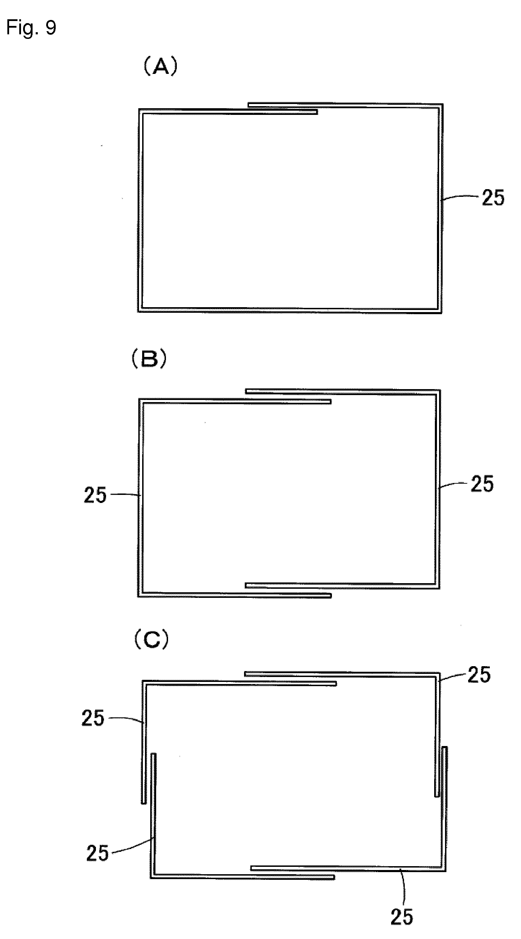

In the embodiment, as illustrated in Fig. 9(A), the one wire 25 is disposed in the bottom surface of the flange 24 while formed into the substantially circular shape. Alternatively plural wires 25 may be used. For example, referring to Fig. 9(B), two wires 25 are substantially circularly disposed while ends of the two wires 25 are parallel to each other. Referring to Fig. 9(C), four wires 25 are substantially circularly disposed while ends of the four wires 25 are parallel to each other.

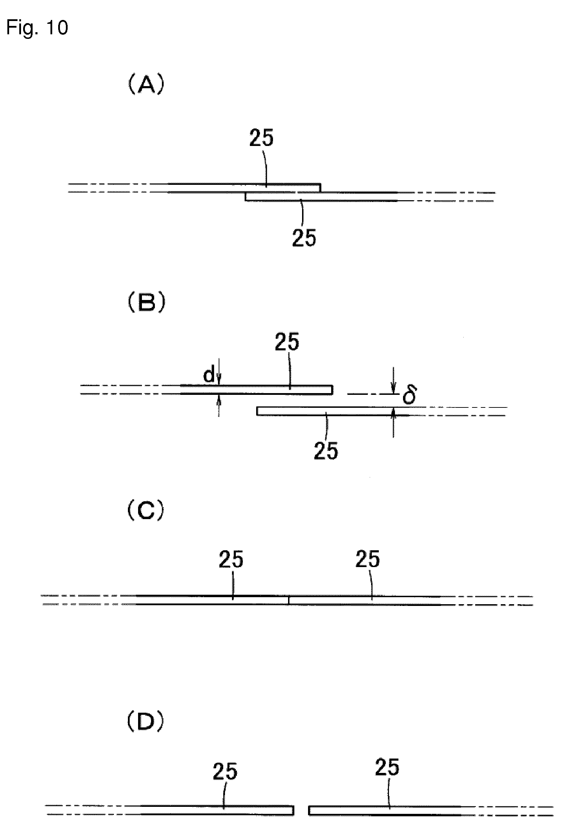

At this point, desirably the ends of the wires 25 are in close contact with each other as illustrated in Fig. 10(A). However, because the wire 25 melted by the resistance welding spreads laterally, the airtightness of the portion to be bonded is not degraded even if the gap is slightly generated between the ends of the wire 25 as illustrated in Fig. 10(B). As described later, a gap δ between the wires 25 may be less than or equal to 1.5 times a diameter (width) d of the wire 25. End faces of the wire 25 may be butted against each other as illustrated in Fig. 10(C). In this case, when the gap is less than or equal to 1.5 times the diameter d of the wire 25, there is no problem even if the gap is generated between the end faces of the wire 25 or even if axial centers of the ends of the wire 25 deviate from each other.

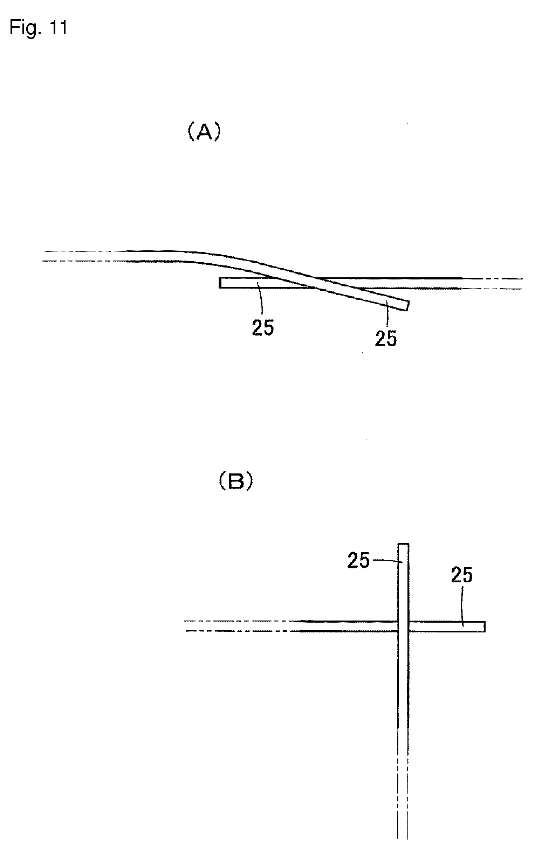

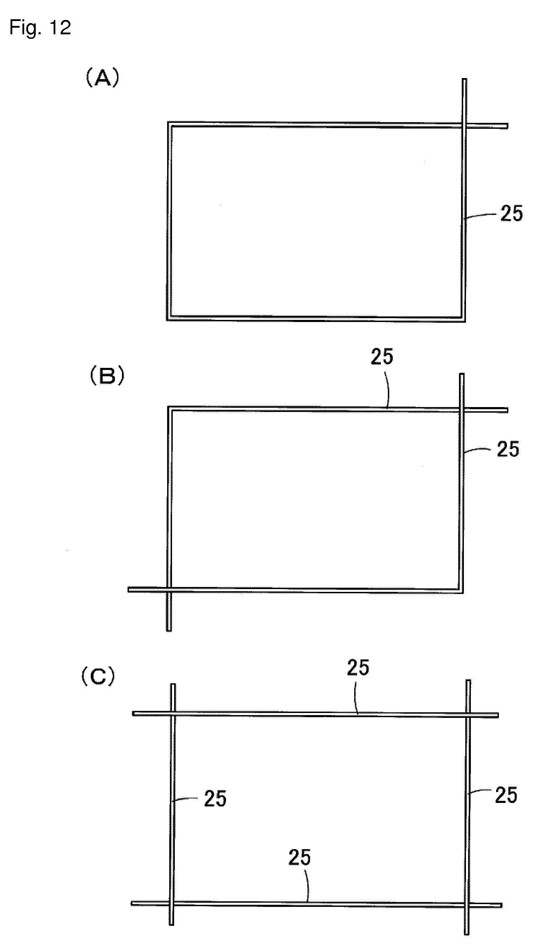

The ends of the wire 25 may intersect with each other. Referring to Fig. 11 (A), the ends of the wire 25 intersect with each other while being in parallel with each other. Referring to Fig. 11 (B), the ends of the wire 25 intersect with each other while being orthogonal to each other. In the case that the ends of the wire 25 are orthogonal to each other as illustrated in Fig. 11 (B), the wires 25 intersect with each other at a corner to circularly dispose one or plural wires 25 as illustrated in Figs. 12(A) to 12(C). Thus, the generation of the gap between the ends of the wire 25 can be prevented when the ends of the wires 25 intersect with each other.

### (Example)

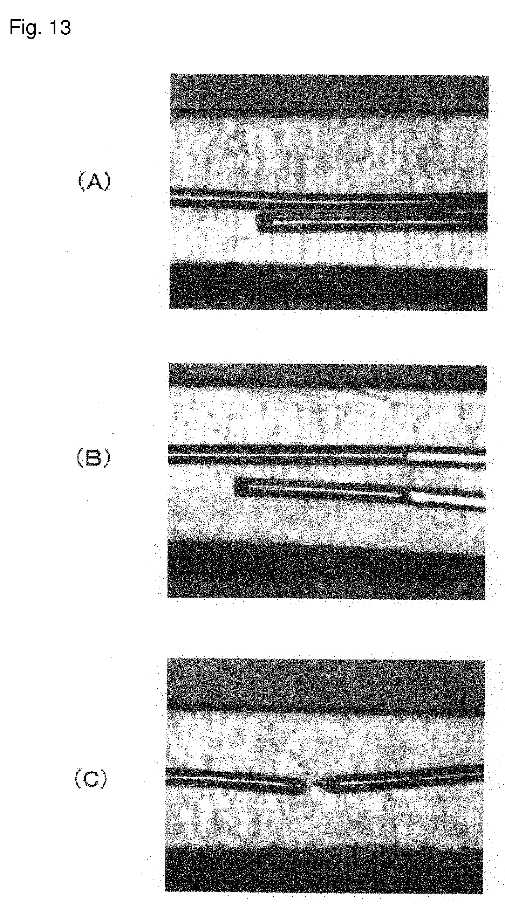

The level of the airtightness was checked by changing the disposition of the ends of the wire in many ways. Fig. 13(A) illustrates a state in which the ends of the wire were brought into close contact with each other while being parallel with each other. In the wire disposition of Fig. 13(A), the metal cap and the metal base were bonded to each other to perform an airtightness test. The vacuum leakage amount from the casing was less than 1 × 10⁻¹⁰ Pa•m³/sec, and the higher airtightness can be confirmed.

Fig. 13(B) illustrates a state in which the ends of the wire were disposed with the gap in parallel with each other. However, the gap between the wires was less than or equal to 1.5 times the wire diameter. In the wire disposition of Fig. 13(B), the vacuum leakage amount from the casing was less than 1 × 10⁻¹⁰ Pa•m³/sec, and the higher airtightness can be confirmed.

Fig. 13(C) illustrates a state in which the ends of the wire were butted against each other with no gap. In the wire disposition of Fig. 13(C), the vacuum leakage amount from the casing was less than 1 × 10⁻¹⁰ Pa•m³/sec, and the higher airtightness can be confirmed.

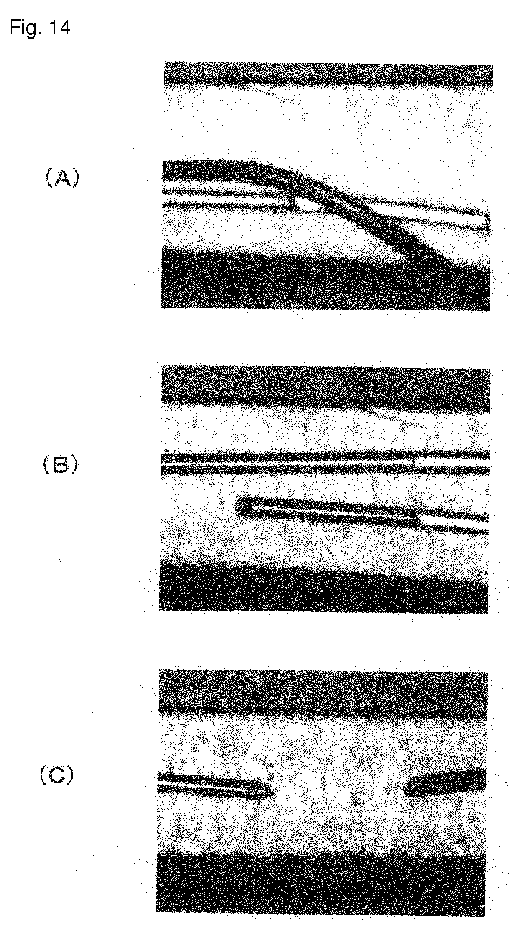

Fig. 14(A) illustrates a state in which the ends of the wire intersect with each other. In the wire disposition of Fig. 14(A), the vacuum leakage amount from the casing was less than 1×10⁻¹⁰ Pa•m³/sec, and the higher airtightness can be confirmed. In Fig. 14(A), the end of the wire protrudes to the inside of the flange. When the wire protrudes to the inside in the actual product, undesirably the protruded wire has an influence on the internal device or the wire drops into the casing.

Fig. 14(B) illustrates a state in which the ends of the wire were disposed with the gap in parallel with each other. However, the gap between the wires was more than or equal to 2 times the wire diameter. In the wire disposition of Fig. 14(B), the sufficient airtightness was not able to be obtained. Accordingly, in the case that the gap is generated between the ends of the wire, desirably the gap is less than or equal to 1.5 times the diameter (width) of the wire.

Fig. 14(C) illustrates a state in which the ends of the wire face each other with the gap. In the wire disposition of Fig. 14(C), the sufficient airtightness was not able to be obtained. Accordingly, in the case that the end faces of the wire are butted against each other, it is necessary that the gap be not largely generated between the end faces of the wire.

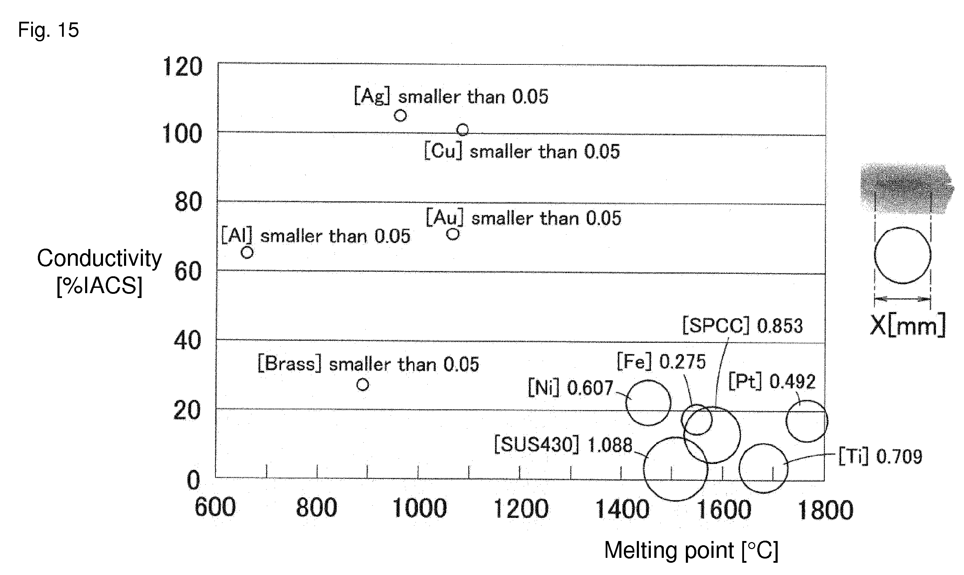

A relationship among conductivity, a melting point, and a nugget diameter of the wire material was analyzed by a simulation, using wires made of various metal materials. Fig. 15 illustrates the result. In the simulation, Ag, Cu, Al, Au, brass, Ni, Fe, SPCC (cold rolling steel), Pt, stainless steel (SUS430), and Ti were used as the wire material. The wire diameter was set to 0.2 mm. The metal cap and the metal base were made of SPCC. As to a resistance welding condition, a current was set to 65 kA, a resistance welding time was set to 36 msec, and a pressurizing force was set to 900 kgf. As used herein, the nugget means a maximum melted portion generated in the portion to be bonded of the metal part, and a size (width) of the maximum melted portion at a bonding interface is referred to as a nugget diameter X as illustrated outside a graph of Fig. 15. Basically the bonding strength depends on the nugget diameter.

The nugget diameter X was obtained by the simulation when the metal cap and the metal base were resistance-welded to each other using the wire made of the wire material having the diameter of 0.2 mm. In Fig. 15, a vertical axis indicates the conductivity of the wire material, a horizontal axis indicates the melting point of the wire material, a center of a circle indicates the conductivity and the melting point of each wire material, and the nugget diameter X is expressed by the size of the circle while indicated by a numerical value (the unit is mm).

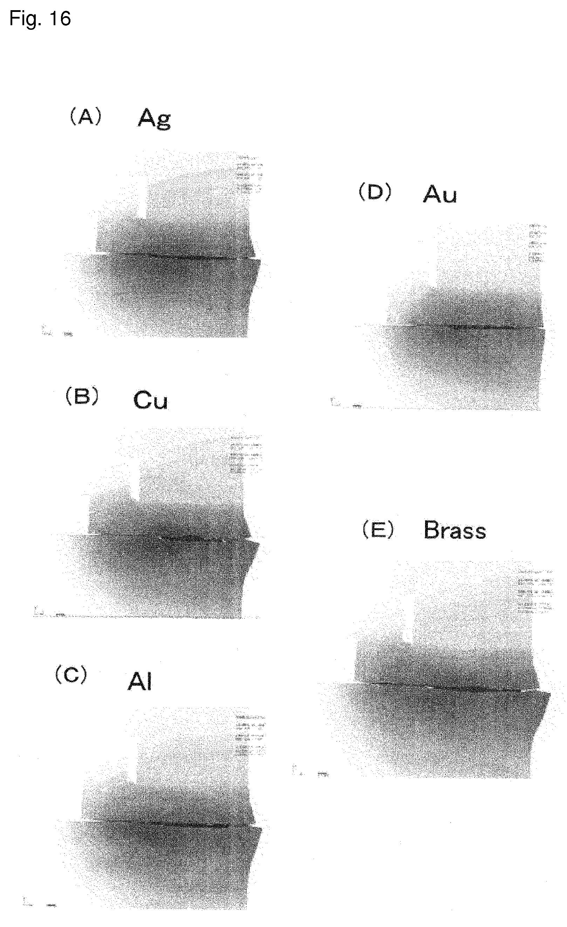

Figs. 16(A) to 16(E) are views illustrating simulation results of the nugget portions when the wire material was Ag, Cu, Al, Au, and brass, respectively. Figs. 17(A) to 17(F) are views illustrating simulation results of the nugget portions when the wire material was Ni, Fe, SPCC, Pt, stainless steel (SUS430), and Ti, respectively. That is, Figs. 16(A) to 16(E) and Figs. 17(A) to 17(F) illustrate temperature distributions when the resistance welding was performed using the wire, the temperature increases as a color becomes blackened, and the blackest portion is the nugget. The nugget diameter of each wire material in Fig. 15 was obtained from Figs. 16(A) to 16(E) and Figs. 17(A) to 17(F).

As can be seen from Fig. 15 and Figs. 17(A) to 17(F), when the wire material was Ni (the melting point of 1453°C), Fe (the melting point of 1535°C), SPCC (the melting point of 1530°C), Pt (the melting point of 1768°C), stainless steel (the melting point of 1400 to 1450°C), and Ti (the melting point of 1668°C), the nugget diameter was largely increased (even in Fe having the smallest nugget diameter of 0.275 mm), and the higher bonding strength was obtained. On the other hand, as can be seen from Fig. 15 and Figs. 16(A) to 16(E), in the remaining wire materials, the nugget diameter was smaller than 0.05 mm, and was extremely small compared with the wire materials in Figs. 17(A) to 17(F). The nugget diameter, the conductivity, and the melting point of each wire material in Fig. 16 are illustrated by the circle in Fig. 15, and the circle corresponding to the nugget diameter of 0.05 mm is illustrated for each wire material in Fig. 16. However, the nugget was not actually generated in the wire materials of Fig. 16, but the nugget diameter was substantial zero. Therefore, it is found that the higher bonding strength is obtained when a melting point Tm of the wire material ranges from To - 130°C to To + 238°C with respect to melting points To of the metal cap and the metal base.

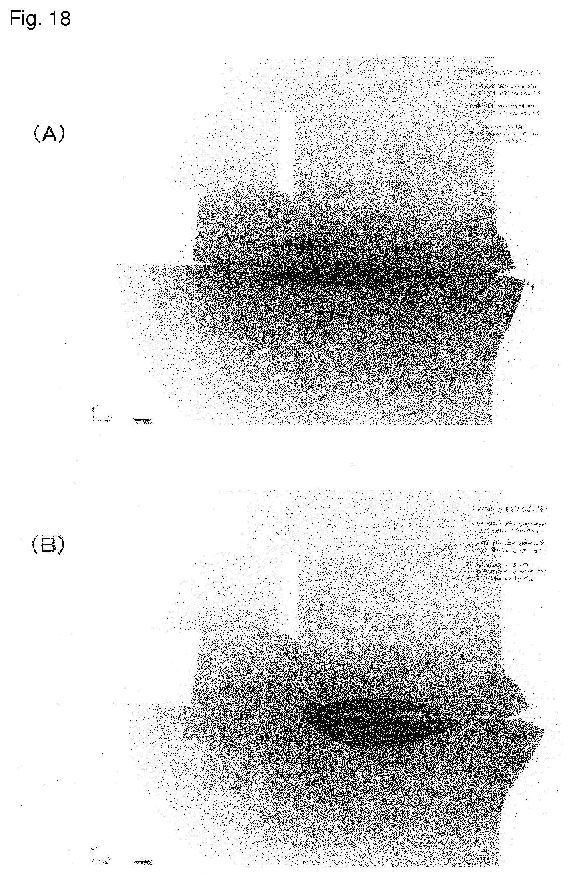

Figs. 18(A) and 18(B) illustrate virtual simulations. Fig. 18(A) illustrates a nugget portion in which the SPCC metal cap and the SPCC metal base were resistance-welded to each other using the wire having the diameter of 0.2 mm. The wire had the same physical properties as stainless steel except for the melting point, and was made of a virtual metal material (the melting point of 1380°C) in which the melting point was lower than that of SPCC by 150°C. Fig. 18(B) illustrates a nugget portion in which the SPCC metal cap and the SPCC metal base were resistance-welded to each other using the wire having the diameter of 0.2 mm. The wire had the same physical properties as stainless steel except for the melting point, and was made of a virtual metal material (the melting point of 1680°C) in which the melting point was higher than that of SPCC by 150°C. As to the resistance welding condition in Figs. 18(A) and 18(B), the current was set to 65 kA, the resistance welding time was set to 36 msec, and the pressurizing force was set to 900 kgf. In the virtual metal material of Fig. 18(A), the nugget diameter became 0.610 mm that was substantially equal to Ni. In the virtual metal material of Fig. 18(B), the nugget diameter became 1.010 mm that was substantially equal to stainless steel.

According to the simulation results in Figs. 15 to 18, it is necessary that the melting point of the wire range from -150°C to 238°C for the melting points of the metal base and the metal cap. Accordingly, the higher bonding strength can be obtained when the melting point of the wire falls within the range of ±150°C for the melting points of the metal base and the metal cap.

As can be seen from Fig. 15, for the wire material in which the melting point falls within the range of ±150°C for the melting points of the metal base and the metal cap, when the conductivity of the wire material is less than or equal to 23%IACS, the nugget diameter is increased to obtain the higher bonding strength.

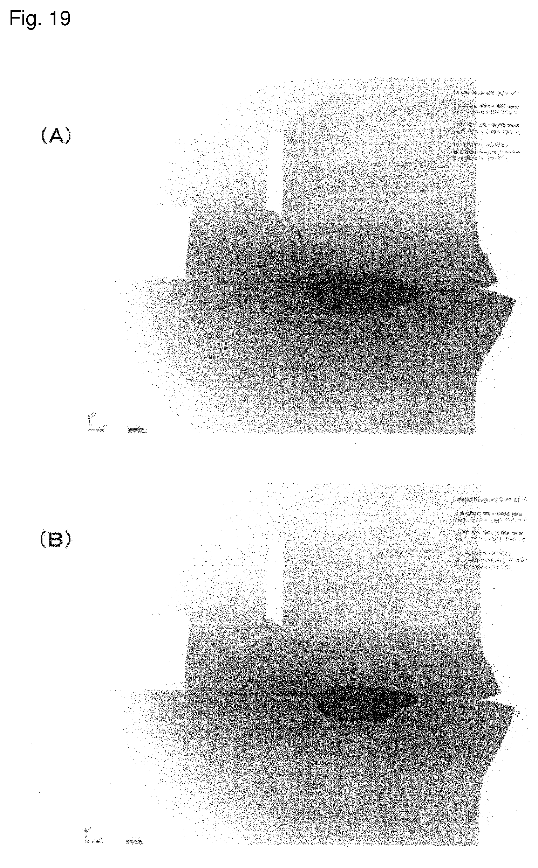

Fig. 19(A) illustrates a nugget portion in which the SPCC metal cap and the SPCC metal base were resistance-welded to each other using the wire having the diameter of 0.2 mm (that is, Figs. 17(A) and 19(A) are identical to each other). The wire was made of Ni (the conductivity of 22%IACS and the melting point of 1435°C). The nugget diameter was 0.607 mm. Fig. 19(B) illustrates a nugget portion in which the SPCC metal cap and the SPCC metal base were resistance-welded to each other using the wire having the diameter of 0.2 mm. The wire had the same physical properties as Ni except for the conductivity, and was made of a virtual metal material in which the conductivity was increased to 28%IACS. As to the resistance welding condition in Figs. 19(A) and 19(B), the current was set to 65 kA, the resistance welding time was set to 36 msec, and the pressurizing force was set to 900 kgf. In the case that the wire made of the virtual metal material of Fig. 19(B) was used, the nugget diameter became 0.464 mm that was substantially equal to Pt. Therefore, it is found from these simulations that the higher bonding strength can be obtained for the wire material having the melting point that falls within the range of ±150°C for the melting points of the metal base and the metal cap when the conductivity is less than or equal to 28%IACS. In consideration of other pieces of data, it can be said that the higher bonding strength can be obtained when the conductivity is less than or equal to 30%IACS.

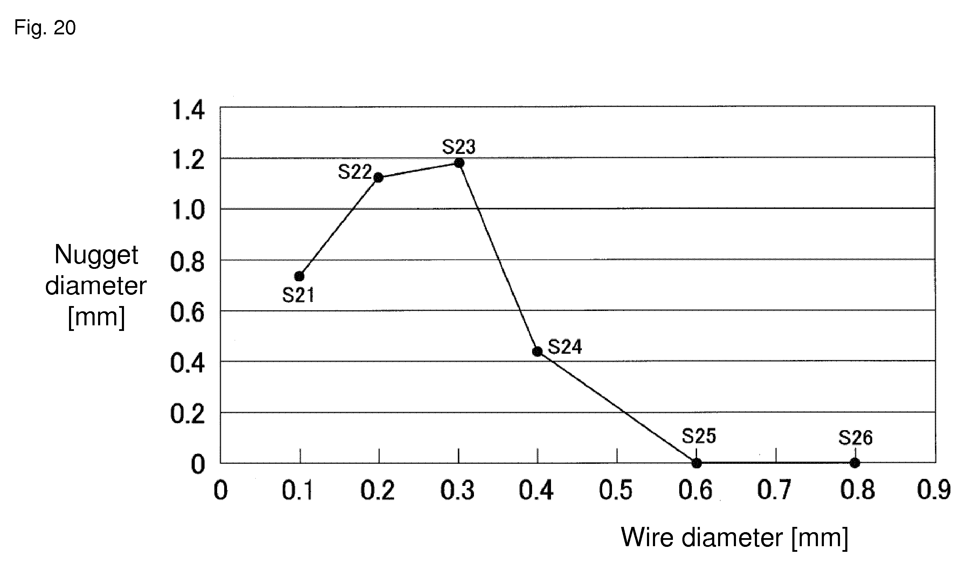

Fig. 20 is a view illustrating a simulation result of the nugget diameter using the stainless steel wire having diameters of 0.1 mm to 0.8 mm. Figs. 21 (A) to 21 (F) illustrate nugget portions of samples S21 to S26 in Fig. 20 in which the resistance welding was performed using the wire having diameters of 0.1 mm to 0.8 mm. In the simulation of Fig. 20, the nugget diameter was as large as about 0.75 mm for the wire diameter of 0.1 mm (see Fig. 21 (A)), and the nugget diameter was maximized for the wire diameter of 0.3 mm (see Fig. 21 (C)). On the other hand, for the wire diameter of 0.4 mm (see Fig. 21 (D)), the nugget diameter was as small as about 0.42 mm, and the airtightness of the casing was degraded. For the wire diameter of 0.6 mm or more (see Figs. 21 (E) and 21 (F)), the metal part was not melted, the melted wire material protruded outward from the gap between the metal parts, and both the bonding strength and the airtightness were not obtained. Therefore, in the simulation of Fig. 20, it is found that the wire diameter is less than or equal to 0.3 mm.

In the simulation of Fig. 20, because the width of the surface to be bonded was set to 1.4 mm, it is obtained as a conclusion that the wire diameter is less than or equal to 1/4.67 time the width of the surface to be bonded. Because the wire diameter is preferably thinned, desirably the wire diameter is less than or equal to 1/5 of the width of the surface to be bonded. Although generally the width of the surface to be bonded is the width of the post-bonding wire material, the width of the surface to be bonded may be set to double the shortest distance from the axial center of the wire to the edge of the portion to be bonded.

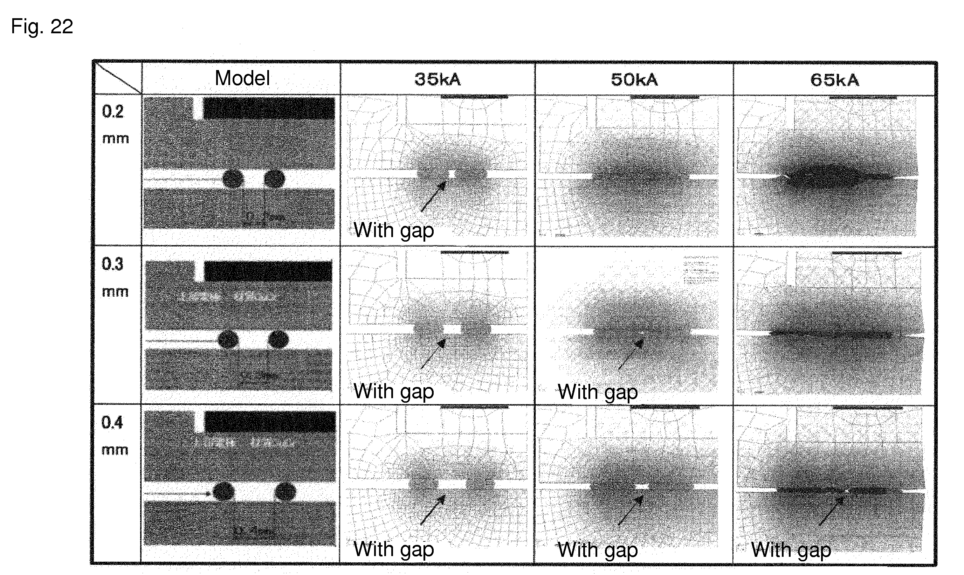

A relationship between the gap between the wires and the gap between portions to be bonded was investigated when the ends of the wire were arrayed in substantially parallel to each other. Fig. 22 illustrates a result. A column indicated by "model" in Fig. 22 is a sectional view illustrating a state in which the two wires having the diameter of 0.2 mm were arrayed in parallel with each other between the metal parts, and each left field indicates the gap size between the wires. A column of "35 kA" in Fig. 22 expresses the temperature distribution when the resistance welding was performed while the current of 35 kA was passed through each model. Similarly, a column of "50 kA" in Fig. 22 expresses the temperature distribution when the resistance welding was performed while the current of 50 kA was passed through each model, and a column of "65 kA" expresses the temperature distribution when the resistance welding was performed while the current of 65 kA was passed through each model.

In the case that the gap between the wires was 0.2 mm (1 time the wire diameter), the small gap was generated in the portion to be bonded when the current of 35 kA was passed. When the gap caused by the gap between the wires remains in the portion to be bonded in which the wire is melted, the airtightness of the casing is not obtained because the inside and outside of the casing are communicated with each other through the gap in the portion to be bonded. On the other hand, for the wire diameter of 0.2 mm, when the current of 50 kA was passed, the melted wire spread to eliminate the gap in the portion to be bonded. When the current of 65 kA was passed, the nugget was generated to bond metal parts to each other with no gap.

In the case that the gap between the wires was 0.3 mm (1.5 times the wire diameter), the relatively large gap remained in the portion to be bonded when the current of 35 kA was passed. For the wire diameter of 0.3 mm, the small gap remained even if the current of 50 kA was passed. On the other hand, when the current of 65 kA was passed, because the melted wire spread to eliminate the gap of the portion to be bonded, the nugget was generated to bond the metal parts to each other with no gap, and the higher airtightness was obtained.

In the case that the gap between the wires was 0.4 mm (double the wire diameter), the large gap was generated in the portion to be bonded when the current of 35 kA was passed. For the wire diameter of 0.4 mm, the relatively large gap was generated in the portion to be bonded even when the current of 50 kA was passed. In the case that the current of 65 kA was passed, the nugget was generated between the metal parts to bond the metal parts to each other. However, the small gap remained in the portion to be bonded, and the airtightness is degraded.

As can be seen from Fig. 22, when the gap between the wires is less than or equal to 1.5 times the wire diameter, the gap between the wires is eliminated in bonding the metal parts to each other, and the higher airtightness can be obtained. On the other hand, in the case that the gap between the wires is greater than 1.5 times the wire diameter, even if the metal parts are bonded to each other, the gap between the wires remains, and the airtightness is degraded. Accordingly, desirably the gap between the ends of the wire is less than or equal to 1.5 times the wire diameter.

### (Application to relay)

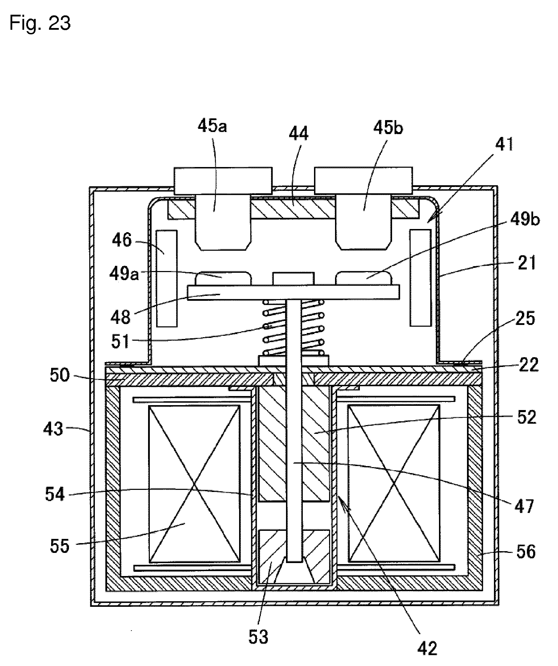

The casing obtained by the bonding method of the present invention is used to prepare a relay (contact device) having a higher environmental resistance. Fig. 23 is a schematic sectional view illustrating a structure of the relay. As illustrated in Fig. 23, a contact mechanism 41 of the relay is sealed in the casing in which the metal cap 21 and the metal base 22 are resistance-welded to each other using the wire 25, and a contact driving mechanism 42 of the relay is provided below the casing.

A ceramic insulating plate 44 is brazed to a bottom surface of a ceiling portion of the metal cap 21. A pair of fixed contacts 45a and 45b is inserted in a hole, which is made in the ceiling portion of the metal cap 21 and the insulating plate 44, in the airtight manner. A yoke base 50 is bonded to the bottom surface of the metal base 22 in the airtight manner, and a shaft 47 is inserted in a hole made in the metal base 22 and the yoke base 50 while being vertically slidable. In the casing, a metal contact base 48 is held at a top end of the shaft 47, and a pair of movable contacts 49a and 49b is fixedly provided on the top surface of the contact base 48 while facing the fixed contacts 45a and 45b. A spring 51 (tension spring) is provided between the bottom surface of the contact base 48 and the metal base 22, and the contact base 48 is biased downward by an elastic force of the spring 51. In the casing, a magnet 46 is provided around the fixed contacts 45a and 45b and the movable contacts 49a and 49b.

A cylindrical container 54 prepared by the drawing of a metal plate is provided on the bottom surface of the yoke base 50. A top end face of the container 54 is opened, and a flange formed around the opening is bonded to the bottom surface of the yoke base 50 in the airtight manner. A lower portion of the shaft 47 is located in the center of the container 54. In an upper portion of the container 54, a fixed iron core 52 is fixed to the bottom surface of the yoke base 50, and the shaft 47 is slidably inserted in the center of the fixed iron core 52. In the lower portion of the container 54, a movable iron core 53 is fixed to the bottom end of the shaft 47. A coil 55 is provided outside the container 54 so as to surround the container 54, and a yoke 56 is provided outside the coil 55. The whole relay is accommodated in an outer package 43.

In the relay of Fig. 23, each contact and the driving mechanism are sealed in the airtight manner by the metal cap 21, the metal base 22, the yoke base 50, and the container 54, and the relay driving portion is externally operated by a magnetic circuit generated by the coil 55.

That is, when the coil 55 located outside the container 54 is energized and excited, the magnetized movable iron core 53 is attracted to the fixed iron core 52, whereby the shaft 47 and the contact base 48 slide upward against the elastic force of the spring 51. As a result, the movable contact 49a comes into press-contact with the fixed contact 45a, the movable contact 49b comes into press-contact with the fixed contact 45b, and the fixed contacts 45a and 45b are electrically closed through the contact base 48. In contrast, when the coil 55 is turned off and demagnetized, the contact base 48 moves downward by the elastic force of the spring 51, the movable contacts 49a and 49b are separated from the fixed contacts 45a and 45b, respectively, and the fixed contacts 45a and 45b are electrically opened.

Therefore, in the relay, the contact portion is sealed in the casing, and a corrosive gas and the like can be prevented from invading in the contact portion. An arc generated between the contacts can easily be eliminated by sealing a gas having a cooling effect.

Generally the wire rod frequently means a thin metal line obtained by the drawing, particularly the wire. The wire rod of the present invention is not limited to the thin metal line obtained by the drawing, but the wire rod may be a thin linear metallic material obtained by working methods such as punching. When the thin circular metal material is prepared by the punching, a seamless circular wire rod can be used.

## Claims

1. A structure for bonding metal parts to each other, wherein a first metal part and a second metal part are bonded to each other using a bonding member having a melting point within a range of -150°C to +150°C with respect to melting points of the first and second metal parts.

2. The structure for bonding metal parts to each other according to claim 1, wherein conductivity of the bonding member is less than or equal to 30%IACS.

3. The structure for bonding metal parts to each other according to claim 1, wherein the bonding member is a wire rod before the bonding.

4. The structure for bonding metal parts to each other according to claim 1, wherein a surface to be bonded of each of the first metal part and the second metal part is a planar surface.

5. The structure for bonding metal parts to each other according to claim 1, wherein a width of the bonding member before the bonding is less than or equal to one-fifth of a width of a surface to be bonded of each of the first and second metal parts.

6. The structure for bonding metal parts to each other according to claim 1, wherein at least one of surfaces to be bonded of the first metal part and the second metal part is subjected to barrel plating.

7. The structure for bonding metal parts to each other according to claim 1, wherein at least one of surfaces to be bonded of the first metal part and the second metal part is not subjected to plating.

8. A method for bonding metal parts to each other, the method comprising: a first step of sandwiching a bonding member between surfaces to be bonded of a first metal part and a second metal part, the bonding member having a melting point within a range of -150°C to +150°C with respect to melting points of the first and second metal parts; and
a second step of resistance-welding the surfaces to be bonded of the first and second metal parts to each other using the bonding member.

9. The method for bonding metal parts to each other according to claim 8, wherein a wire rod is used as the bonding member.

10. The method for bonding metal parts to each other according to claim 9, wherein the bonding member is a wire rod comprising ends, and the bonding member is inserted while circularly extending along the surfaces to be bonded of the first and second metal parts in the first step.

11. The method for bonding metal parts to each other according to claim 10, wherein both ends of the wire rod are disposed in parallel with a gap less than or equal to 1.5 times a width of the wire rod in the first step.

12. The method for bonding metal parts to each other according to claim 10, wherein both ends of the bonding member are butted against each other in the first step.

13. The method for bonding metal parts to each other according to claim 9, wherein the bonding member is a closed wire rod comprising no end.

14. The method for bonding metal parts to each other according to claim 9, wherein a width of the wire rod is less than or equal to one-fifth of a width of the surface to be bonded of each of the first and second metal parts.

15. The method for bonding metal parts to each other according to claim 9, wherein the wire rod is tack-welded to the first or second metal part in the first step.

16. A contact device in which a contact is disposed in a space formed by a first metal part and a second metal part, wherein the first metal part and the second metal part are bonded to each other using a bonding member having a melting point within a range of -150°C to +150°C with respect to melting points of the first and second metal parts.
